# EUROPEAN PATENT APPLICATION

(11) **EP 2 921 546 A1**
(43) Date of publication of application: **23.09.2015**
(21) Application number: 14160192.2
(22) Date of filing: 17.03.2014
(51) Int. Cl.: C10G 2/00, C07C 1/04, B01J 23/75, B01J 37/18, B01J 37/14, B01J 21/06, B01J 8/00

(54) **A method for start-up of a Fischer-Tropsch reactor**

(71) Applicant: SHELL INTERNATIONAL RESEARCH MAATSCHAPPIJ B.V., 2596 HR Den Haag (NL)
(72) Inventor: Bezemer, Gerrit Leendert, 1031HW Amsterdam (NL)
(74) Representative: Matthezing, Robert Maarten

(57) **Abstract**

The invention relates to a method for start-up of a Fischer-Tropsch reactor comprising the following steps:
(a) providing a reactor with a fixed bed of Fischer-Tropsch catalyst that comprises cobalt as catalytically active metal, the fixed bed comprising an upstream part and a downstream part, wherein the catalyst in the upstream part of the fixed bed is in a non-reduced state and the catalyst in the downstream part of the fixed bed is in a reduced state;
(b) supplying a gaseous feed stream comprising carbon monoxide and hydrogen to the reactor and converting carbon monoxide and hydrogen supplied with the gaseous feed stream to the reactor into hydrocarbons at a reaction temperature and at a set reactor productivity, wherein the reaction temperature is initially at least 200 °C, and maintaining the set reactor productivity by adjusting the reaction temperature.

## Description

### Field of the invention

The present invention relates to a method for start-up of a Fischer-Tropsch reactor containing a Fischer-Tropsch catalyst, wherein at least during start-up of the reactor the activity of the catalyst is decreased.

The catalyst is suitable for use in producing normally gaseous, normally liquid and optionally solid hydrocarbons from synthesis gas generally provided from a hydrocarbonaceous feed, in a Fischer-Tropsch process. In the current specification such a catalyst is referred to as a Fischer-Tropsch catalyst.

### Background to the invention

The Fischer-Tropsch process can be used for the conversion of synthesis gas into liquid and/or solid hydrocarbons. The synthesis gas may be obtained from hydrocarbonaceous feedstock in a process wherein the feedstock, e.g. natural gas, associated gas and/or coal-bed methane, heavy and/or residual oil fractions, coal, biomass, is converted in a first step into a mixture of hydrogen and carbon monoxide. This mixture is often referred to as synthesis gas or syngas. The synthesis gas is then fed into a reactor where it is converted in one or more steps over a suitable catalyst at elevated temperature and pressure into paraffinic compounds and water in the actual Fischer-Tropsch process. The obtained paraffinic compounds range from methane to high molecular weight modules. The obtained high molecular weight modules can comprise up to 200 carbon atoms, or, under particular circumstances, even more carbon atoms. Numerous types of reactor systems have been developed for carrying out the Fischer-Tropsch reaction. For example, Fischer-Tropsch reactor systems include fixed bed reactors, especially multi-tubular fixed bed reactors, fluidised bed reactors, such as entrained fluidised bed reactors and fixed fluidised bed reactors, and slurry bed reactors such as three-phase slurry bubble columns and ebulated bed reactors.

Catalysts used in the Fischer-Tropsch synthesis often comprise a carrier-based support material and one or more metals from Group 8-10 of the Periodic Table of Elements, especially from the cobalt or iron groups, optionally in combination with one or more metal oxides and/or metals as promoters selected from zirconium, titanium, chromium, vanadium and manganese, especially manganese. Such catalysts are known in the art and have been described for example, in the specifications of WO 9700231A and US 4595703.

One of the limitations of a Fischer-Tropsch process is that the activity of the catalyst will, due to a number of factors, decrease over time. The activity of the catalyst is decreased as compared to its initial catalytic activity. The initial activity of the catalyst can be its activity when fresh prepared. A catalyst that shows a decreased activity after use in a Fischer-Tropsch process is sometimes referred to as deactivated catalyst, even though it usually still shows activity. Sometimes such a catalyst is referred to as a deteriorated catalyst. Sometimes it is possible to regenerate the catalyst. This may be performed, for example, with one or more oxidation and/or reduction steps.

After regeneration, catalysts often show an activity that is lower than the activity of freshly prepared catalysts. Especially after multiple regenerations, it often proofs hard to regain an activity level comparable to the activity of freshly prepared catalysts. In order to be able to use a catalyst for a long time, it thus may be desirable to start a Fischer-Tropsch process with a fresh catalyst that has a relatively high activity.

The use of fresh or rejuvenated catalysts with a relatively high initial activity may have disadvantages. This may especially be the case when the amount of catalyst used in a reactor tube is fixed after loading of the catalyst in the reactor tube. One example of a reactor tube filled with a fixed amount of catalyst is a reactor tube filled with a packed bed of catalyst particles.

In a Fischer-Tropsch process with a catalyst with a relatively high initial activity, the activity of the catalyst is especially high at the start of the process. And, due to the high activity of the catalyst, a lot of water is produced in the Fischer-Tropsch hydrocarbon synthesis, resulting in a high relative humidity at the start of the Fischer-Tropsch process. During Fischer-Tropsch synthesis the relative humidity in a reactor tube may increase to such a level that it accelerates the deactivation of the catalyst during use. During start-up of a Fischer-Tropsch reactor with a very active catalyst, the reaction temperature is typically kept at a relatively low value, e.g. below 200 °C, in order to avoid a too high product yield and accompanying high temperature rise due to the exothermic reaction. Without wishing to be bound to any theory, it is believed that especially the combination of relatively low temperature and a relatively high yield results in a high relative humidity in the reactor and therewith in undesired irreversible catalyst deactivation.

Therefore, especially in the start-up phase of a Fischer Tropsch reactor with a catalyst with a relatively high activity, the deactivation of the catalyst takes place at a relatively high rate. Deactivation due to relative humidity proofed to be difficult to reverse. The high initial activity in such a case is thus quickly lost, whereas regeneration procedures have only a limited effect.

### Summary of the invention

It is an object of the present invention to provide an improved Fischer-Tropsch process in which a cobalt catalyst is used that has a relatively high initial activity. Especially the start-up of a Fischer-Tropsch reactor provided with fresh catalyst is improved. Preferably, also the start-up of a Fischer-Tropsch reactor after a regeneration step is improved.

It has now been found that the conditions of relative humidity and therewith of increased catalyst deactivation at the start-up of a Fischer-Tropsch reactor loaded with a fixed bed of fresh or rejuvenated catalyst can be avoided by operating the reactor such that the catalyst in the upstream part of the fixed bed is inactive or less active during start-up and in the initial stages of operation of the Fischer-Tropsch reactor. In particular it has been found that by providing a fixed bed of catalyst wherein the catalyst in the most upstream part of the fixed bed is in a non-reduced state and the catalyst in a downstream part of the fixed bed, preferably the remaining part, is in a reduced state, the overall catalyst activity in the reactor is decreased and, as a result, the reaction temperature can be increased in order to achieve a desired set reactor productivity. Such conditions of higher temperature and decreased overall catalyst activity result in a lower relative humidity at the start-up of the reactor and therewith in less catalyst deactivation. Moreover, since the oxidation state of the catalyst seems to be reversible, in the sense that during operation of the reactor oxidized catalyst is gradually reduced, the decrease in overall catalyst activity is temporarily and only occurs during the start-up and initial operation stages where such decreased activity is desirable.

Accordingly, the present invention relates to a method for start-up of a Fischer-Tropsch reactor comprising the following steps:
(a) providing a reactor with a fixed bed of Fischer-Tropsch catalyst that comprises cobalt as catalytically active metal, the fixed bed comprising an upstream part and a downstream part, wherein the catalyst in the upstream part of the fixed bed is in a non-reduced state and the catalyst in the downstream part of the fixed bed is in a reduced state;
(b) supplying a gaseous feed stream comprising carbon monoxide and hydrogen to the reactor and converting carbon monoxide and hydrogen supplied with the gaseous feed stream to the reactor into hydrocarbons at a reaction temperature and at a set reactor productivity, wherein the reaction temperature is initially at least 200 °C, and maintaining the set reactor productivity by adjusting the reaction temperature.

An important advantage the method according to the invention is that a higher reaction temperature, resulting in a lower relative humidity, is allowed in the start-up phase and the initial phase of the operation of the reactor. Another advantage is that the decreased catalyst activity is temporarily and only occurs during the stage of operation of the reactor wherein such reduction is desired. It has further been found that the selectivity for C5+ hydrocarbons is not importantly affected by the higher reaction temperature during start-up and initial phase of operation of the reactor.

Another advantage of the method according to the invention is that, compared to start-up methods wherein a relatively low initial temperature is used to avoid a too high yield and water production of the reactor at or shortly after start-up, heat recovery from the process is improved, since steam of a higher quality can be produced.

### Detailed description of the invention

The method according to the invention is a method for start-up of a Fischer-Tropsch reactor. The method comprises a first step of providing a reactor with a fixed bed of Fischer-Tropsch catalyst. The catalyst comprises cobalt as catalytically active metal.

The catalyst may be a fresh catalyst or a rejuvenated catalyst. Reference herein to a fresh catalyst is to a freshly prepared catalyst that has not been subjected to a Fischer-Tropsch process. Reference herein to a rejuvenated catalyst is to a regenerated catalyst of which the initial activity has been at least partially restored, typically by means of several reduction and/or oxidation steps. The catalyst is preferably a fresh catalyst, since in particular fresh catalysts have a very high initial activity.

The catalyst comprises cobalt as catalytically active metal. Fischer-Tropsch catalysts comprising cobalt as catalytically active metal are known in the art. Any suitable cobalt-comprising Fischer-Tropsch catalysts known in the art may be used. Typically such catalyst comprises cobalt on a carrier-based support material, optionally in combination with one or more metal oxides and/or metals as promoters selected from zirconium, titanium, chromium, vanadium and manganese, especially manganese. A most suitable catalyst comprises cobalt as the catalytically active metal and titania as carrier material.

The catalyst may further comprise one or more promoters. One or more metals or metal oxides may be present as promoters, more particularly one or more d-metals or d-metal oxides. Suitable metal oxide promoters may be selected from Groups 2-7 of the Periodic Table of Elements, or the actinides and lanthanides. In particular, oxides of magnesium, calcium, strontium, barium, scandium, yttrium, lanthanum, cerium, titanium, zirconium, hafnium, thorium, uranium, vanadium, chromium and manganese are suitable promoters. Suitable metal promoters may be selected from Groups 7-10 of the Periodic Table of Elements. Manganese, iron, rhenium and Group 8-10 noble metals are particularly suitable as promoters, and are preferably provided in the form of a salt or hydroxide.

The promoter, if present in the catalyst, is typically present in an amount of from 0.001 to 100 parts by weight per 100 parts by weight of carrier material, preferably 0.05 to 20, more preferably 0.1 to 15. It will however be appreciated that the optimum amount of promoter may vary for the respective elements which act as promoter.

A most suitable catalyst comprises cobalt as the catalytically active metal and zirconium as a promoter. Another most suitable catalyst comprises cobalt as the catalytically active metal and manganese and/or vanadium as a promoter. If the catalyst comprises cobalt as the catalytically active metal and manganese and/or vanadium as promoter, the cobalt: (manganese + vanadium) atomic ratio is advantageously at least 12:1.

It has been found that the method according to the invention is particularly suitable for start-up of a Fischer-Tropsch reactor containing a catalyst without a noble metal as promoter. Therefore, the catalyst preferably does not comprise a noble metal.

References to "Groups" and the Periodic Table as used herein relate to the new IUPAC version of the Periodic Table of Elements such as that described in the 87th Edition of the Handbook of Chemistry and Physics (CRC Press).

In step (a), the reactor is provided with a fixed bed of the catalyst. Reference herein to a fixed bed is to a catalyst in a fixed arrangement such as for example a fixed bed of catalyst particles or a catalyst coated on a fixed structure such as a metal or monolithic structure. Preferably the fixed bed is a fixed bed of catalyst particles, more preferably in a multi-tubular fixed bed reactor configuration.

The fixed bed comprises an upstream part and a downstream part. The catalyst in the upstream part of the fixed bed is in a non-reduced state and the catalyst in the downstream part of the fixed bed is in a reduced state. Reference herein to a catalyst in a non-reduced state is to a catalyst wherein at least 50% of the cobalt is not in its reduced, metallic state. Reference herein to a catalyst in a reduced state is to a catalyst wherein at least 80% of the cobalt is in its reduced, metallic state.

Reference herein to the upstream part of the fixed bed is to the part of the fixed bed that is at the upstream end of the fixed bed with respect to the direction of flow of the gaseous feed stream during normal operation of the reactor. Reference herein to the downstream part of the fixed bed is to the part of the fixed bed that is at the downstream end of the fixed bed with respect to the direction of flow of the gaseous feed stream during normal operation of the reactor. Preferably, the upstream part and the downstream part are directly adjacent to each other such that the fixed bed consists of the upstream part and the downstream part. The fixed bed may, however, comprise an intermediate part between the upstream and the downstream parts wherein between 50 and 80% of the cobalt is in its reduced, metallic state. If present, such intermediate part comprises at most 10%, preferably at most 5% of the total length of the fixed bed. Preferably, the upstream part of the fixed bed, i.e. the part with catalyst in its oxidized state, has a length in the range of from 10 to 50% of the total length of the fixed bed, more preferably of from 15 to 40% of the total length of the fixed bed. It will be appreciated that the optimum length of the upstream part will *inter alia* depend on the initial activity of the catalyst. In case a catalyst with a very high initial activity is used, a larger part of the catalyst will need to be inactive at the start-up of the reactor in order to be able to set a sufficiently high initial reaction temperature without exceeding the desired reactor productivity.

Preferably the fixed bed has an upstream part wherein at least 65% of the cobalt is not in its reduced, metallic state, more preferably at least 80%. More preferably, the fixed bed has an upstream layer with a length in the range of from 10 to 50% of the total length of the fixed bed, even more preferably 15 to 40%, wherein at least 65% of the cobalt, even more preferably at least 80%, is not in its reduced state.

Preferably, the fixed bed has a downstream part of at least 50%, more preferably at least 60%, of the total length of the fixed bed wherein at least 90%, more preferably at least 95% of the cobalt is in its reduced, metallic state.

Preferably, the fixed bed consists of an upstream layer wherein at least 65% of the cobalt in the catalyst is in a non-reduced state and a downstream part wherein at least 90% of the cobalt in the catalyst is its reduced, metallic state, i.e. without an intermediate layer with catalyst with cobalt in an intermediate reduction state.

Once the reactor with the fixed bed of catalyst is provided in step (a), Fischer-Tropsch hydrocarbon synthesis is started in step (b) by supplying a gaseous feed stream comprising carbon monoxide and hydrogen to the reactor. The gaseous feed stream may be supplied to the reactor at any suitable gas hourly space velocity. Carbon monoxide and hydrogen in the gaseous feed stream supplied to the reactor are converted into hydrocarbons at a reaction temperature and at a set reactor productivity. The conversion may be carried out at any suitable reaction pressure. The reactor productivity is set at a desired value, preferably a value in the range of from 75 to 500 grams hydrocarbons per liter of catalyst per hour, more preferably in the range of from 100 to 350 grams hydrocarbons per liter of catalyst per hour.

The reaction temperature is initially at least 200 °C, preferably at least 203 °C, more preferably in the range of from 205 to 220 °C, even more preferably of from 210 to 215 °C. During the conversion, the reactor productivity is maintained at the set value. This is done by compensating any change in intrinsic catalyst activity, usually decrease in catalyst activity due to gradual catalyst deactivation, by adjusting the reaction temperature.

Reference herein to reactor productivity is to space time yield of the reactor, i.e. the amount of hydrocarbons produced per volume of catalyst per hour (g/l.h). Reference herein to maintaining the reactor productivity is to maintaining the reactor productivity within 10% of the set value, i.e. in a range of from 90 to 110% of the set value.

Reference herein to activity of the catalyst is to the intrinsic activity of the catalyst. It is thus a property of the catalyst and not dependent on the actual reaction conditions applied.

Reference herein to the reaction temperature is to the temperature of coolant, typically cooling water, surrounding the fixed bed of catalyst.

Reference to the gaseous feed stream to the reactor is to the combined feed stream to the reactor including any gaseous recycle stream.

It will be appreciated that for a catalyst with a given activity, and for given conditions such as pressure, gas hourly space velocity and reactor configuration, reaction temperature and yield (reactor productivity) are directly related. If the reactor productivity is to be set at a certain value, reaction temperature is a resulting parameter and *vice versa.*

Since in the method according to the invention part of the catalyst in the fixed bed is in a non-reduced state and therefore inactive, the initial overall catalyst activity in the reactor is decreased. The initial overall catalyst activity is mainly determined by the relative amount of non-reduced catalyst in the reactor. Due to this lower activity, the initial reaction temperature needed to achieve the desired set value for the reactor productivity is sufficiently high to avoid a combination of low reaction temperature and high yield resulting in a high relative humidity in the reactor that might be detrimental for the stability of the catalyst, i.e. would result in irreversible and/or rapid catalyst deactivation.

During operation of a Fischer-Tropsch process, the reduced catalyst, i.e. the catalyst in the downstream part of the fixed bed, is typically gradually deactivated. It has been found that the catalyst in the upstream part, i.e. the catalyst in non-reduced state, may be gradually reduced during hydrocarbon synthesis step (b). In order to compensate for any changes in overall catalyst activity, the reaction temperature is adjusted to operation of the reactor, to maintain the reactor productivity at its set value.

The conversion of carbon monoxide and hydrogen into hydrocarbons in step (b) may be carried out at any reaction pressure and gas hourly space velocity known to be suitable for Fischer-Tropsch hydrocarbon synthesis. Preferably, the reaction pressure is in the range of from 10 to 100 bar (absolute), more preferably of from 20 to 80 bar (absolute). The gas hourly space velocity is preferably in the range of from 500 to 25,000 h⁻¹, more preferably of from 900 to 15,000 h⁻¹, even more preferably of from 1,300 to 8,000 h⁻¹. Preferably, the reaction pressure and the gas hourly space velocity are kept constant in step (b).

The method according to the invention may be applied for the start-up and further operation of a Fischer-Tropsch reactor with a fresh catalyst or with a regenerated catalyst. The method according to the invention is particularly suitable for a Fischer-Tropsch reactor containing a fresh catalyst.

Step (a), i.e. provision of a reactor with a fixed wherein the catalyst in the upstream part is in a non-reduced state and in the downstream part in a reduced state, may be done in several ways, for example 1) by first providing a fixed bed wherein all catalyst is reduced and then in-situ oxidizing the catalyst in the upstream part of the fixed bed, 2) by first providing a fixed bed wherein all catalyst is non-reduced and then in-situ reducing the catalyst in the downstream part of the foxed bed, or 3) by loading the reactor with (ex-situ) pre-reduced catalyst in its downstream part and non-reduced catalyst in its upstream part.

In a preferred embodiment, step (a) comprises loading non-reduced catalyst in the reactor to form the fixed bed, in-situ reducing all catalyst in the fixed bed; and oxidising the catalyst in the upstream part of the fixed bed without oxidizing the catalyst in the downstream part of the fixed bed. Loading a reactor with non-reduced catalyst to form a fixed bed and then in-situ reducing all catalyst is well-known in the art. Oxidizing the upstream part may for example be done by passing, for a certain period of time, air over the catalyst bed via the upstream end of the bed, at elevated temperature. Thus, cobalt in the upstream part of the bed will be oxidized to cobalt oxide (CoO and/or Co₃O₄). By timely stopping the air supply, only cobalt in the upstream layer of the fixed bed of catalyst will be oxidized.

In another preferred embodiment, step (a) comprises loading the upstream part of the reactor with pre-reduced Fischer-Tropsch catalyst and loading the upstream part of the reactor with non-reduced Fischer-Tropsch catalyst. Pre-reduced cobalt-based Fischer-Tropsch catalyst is commercially available.

In another preferred embodiment, step (a) comprises providing the reactor with a fixed bed of non-reduced Fischer-Tropsch catalyst and in-situ reducing the catalyst in the downstream part of the fixed bed by supplying a reducing gas to the reactor via the downstream end of the reactor, i.e. in a direction opposite to the direction of gas flow during normal operation of the reactor, under reduction conditions until the catalyst in the downstream part of the fixed bed is reduced without reducing the catalyst in the upstream part of the fixed bed. Reduction of catalyst in the upstream part of the fixed bed can be avoided by timely stopping the supply of reducing gas to the reactor.

It has been found that by using the method according to the invention, catalyst stability is improved in the sense that it takes longer until the activity of the catalyst has decreased to such a low level that rejuvenation of the catalyst is needed.

A Fischer-Tropsch process typically comprises more than one reactors. In a Fischer-Tropsch process with several reactors, the method according to the invention may be applied in only one or in only a part of the reactors, i.e. any reactor loaded with fresh catalyst or with rejuvenated catalyst.

The invention is illustrated by the following nonlimiting examples.

### Examples

### Experiment 1 (invention)

Particles of cobalt-based Fischer-Tropsch catalyst were loaded in a reactor tube and in-situ reduced. Subsequently the reactor temperature was increased to 350 °C and a flow of air was supplied to the top of the reactor until sufficiently air was supplied to oxidize cobalt to Co₃O₄ in the upper 1/3rd of the fixed bed of catalyst. Subsequently the reactor temperature was cooled down. Fischer-Tropsch hydrocarbon synthesis was started by supplying synthesis gas to the upstream end of the reactor (inlet pressure 60 bar (absolute), gas hourly space velocity of 2,400 h⁻¹). The reactor productivity was set at a space time yield of 200 g/l.h. The reaction temperature was gradually increased during the experiment to maintain the reactor productivity at adjusted at 200 g/l.h.

The relative catalyst activity (averaged over the entire fixed bed) of the catalyst was determined at 0, 400 and 800 hours. The oxidation/reduction state of the catalyst in the top, the middle (at 50% of the total length) and the bottom of the fixed bed was determined by means of XRD analysis.

### Experiment 2 (invention)

The experiment of Example 1 was repeated but now cobalt in the upper 1/6th of the fixed bed of catalyst was oxidized to Co₃O₄.

### Experiment 3 (comparison)

The experiment of Example 1 was repeated but without oxidizing part of the catalyst.

**Table. Experimental results for experiments 1-3**

| Exp. | Fraction oxidised | Runtime (hours) | T (°C) | Overall activity¹ | C5+ selectivity | RH² (%) |
|---|---|---|---|---|---|---|
| 1 | 1/3 | 0 | 212 | 1.42 | 92.4 | 56 |
| | | 400 | 214 | 1.31 | 92.6 | 54 |
| | | 800 | 216 | 1.25 | 92.6 | 50 |
| 2 | 1/6 | 0 | 207 | 1.60 | 92.7 | 62 |
| | | 400 | 210 | 1.46 | 92.4 | 58 |
| | | 800 | 211 | 1.39 | 92.6 | 56 |
| | | 1135 | 212 | 1.36 | 91.8 | 55 |
| 3 | none | 0 | 201 | 1.85 | 93.3 | 65 |
| | | 400 | 208 | 1.54 | 92.4 | 59 |
| | | 800 | 211 | 1.42 | 92.2 | 57 |
| | | 1135 | 213 | 1.36 | 91.2 | 55 |

| | | | | | | |
|---|---|---|---|---|---|---|
| ¹ expressed as activity factor (quotient of actual space time yield and the expected space time yield for a reference catalyst under the same conditions) ² RH: relative humidity | | | | | | |

The XRD results showed that in experiment 1, at the start of hydrocarbon synthesis (t = 0) all the cobalt in the top of the fixed bed was present as Co₃O₄. At t = 0, all cobalt in the middle and bottom of the fixed bed was in its reduced, metallic state. After 1150 runhours, all cobalt, also in the top of the fixed bed was in its reduced, metallic state.

The results show that if the method according to the invention is applied, there is a less steep decrease in intrinsic catalyst activity during operation of the Fischer-Tropsch process. Moreover, the C5+ selectivity after 800 runhours is better when the method according to the invention is applied compared to a method without oxidation of the upstream catalyst layer during the initial stages of the process.

## Claims

1. A method for start-up of a Fischer-Tropsch reactor comprising the following steps:
(a) providing a reactor with a fixed bed of Fischer-Tropsch catalyst that comprises cobalt as catalytically active metal, the fixed bed comprising an upstream part and a downstream part, wherein the catalyst in the upstream part of the fixed bed is in a non-reduced state and the catalyst in the downstream part of the fixed bed is in a reduced state;
(b) supplying a gaseous feed stream comprising carbon monoxide and hydrogen to the reactor and converting carbon monoxide and hydrogen supplied with the gaseous feed stream to the reactor into hydrocarbons at a reaction temperature and at a set reactor productivity, wherein the reaction temperature is initially at least 200 °C, and maintaining the set reactor productivity by adjusting the reaction temperature.

2. A method according to claim 1, wherein the reaction temperature in step (b) is initially at least 203 °C, preferably in the range of from 205 to 220 °C, more preferably in the range of from 210 to 215 °C.

3. A method according to claim 1 or 2, wherein the upstream part of the fixed bed has a length in the range of from 10 to 50% of the total length of the fixed bed, preferably of from 15 to 40% of the total length of the fixed bed.

4. A method according to any one of the preceding claims, wherein at least 65% of the cobalt of the catalyst in the upstream part is in a non-metallic state.

5. A method according to any one of the preceding claims, wherein the downstream part of the fixed bed has a length in the range of from 50% to 90% of the total length of the fixed bed and at least 90% of the cobalt of the catalyst in the downstream part is in metallic state.

6. A method according to any one of the preceding claims, wherein the catalyst in step (a) is a fresh catalyst.

7. A method according to any one of the preceding claims, wherein the catalyst does not comprise a noble metal.

8. A method according to any one of the preceding claims, wherein step (a) comprises:
- loading a fixed bed of non-reduced Fischer-Tropsch catalyst in the reactor;
- in-situ reducing all catalyst in the fixed bed; and
- oxidising the catalyst in the upstream part of the fixed bed without oxidizing the catalyst in the downstream part of the fixed bed.

9. A method according to any one of claims 1 to 7, wherein
step (a) comprises loading the downstream part of the reactor with pre-reduced Fischer-Tropsch catalyst and loading the upstream part of the reactor with non-reduced Fischer-Tropsch catalyst.

10. A method according to any one of claims 1 to 7, wherein
step (a) comprises providing the reactor with a fixed bed of non-reduced Fischer-Tropsch catalyst and in-situ reducing the catalyst in the downstream part of the fixed bed by supplying a reducing gas to the reactor via the downstream end of the reactor, under reduction conditions until the catalyst in the downstream part of the fixed bed is reduced without reducing the catalyst in the upstream part of the fixed bed.
